# EUROPÄISCHE PATENTSCHRIFT

(11) **EP 1 445 518 B1**
(45) Veröffentlichungstag und Bekanntmachung des Hinweises auf die Patenterteilung: **07.03.2007**
(21) Anmeldenummer: 03027235.5
(22) Anmeldetag: 28.11.2003
(51) Int. Cl.: F16J 9/14

(54) **Kolbenring**
Piston ring
Segment de piston

(30) Priorität: 05.02.2003 DE 10304565
(43) Veröffentlichungstag der Anmeldung: 11.08.2004
(73) Patentinhaber: AUDI AG, 85045 Ingolstadt (DE)
(72) Erfinder: Schiberna, Peter, 85051 Ingolstadt (DE); Franke, Robert, 85101 Lenting (DE)
(74) Vertreter: Asch, Konrad

(56) Entgegenhaltungen:
- DE-A- 3 612 454
- FR-A- 1 118 722
- US-A- 1 343 828
- US-A- 1 350 849

## Beschreibung

Die Erfindung betrifft einen Kolbenring und eine Drehdurchführung mit einem Kolbenring gemäß der im Oberbegriff des Anspruchs 1 oder 2 angegebenen Arten.

Ein Kolbenring dient dazu, die Abdichtung eines Ringspaltes zwischen dem Kolben und einer ihn umgebenden Buchse zu verbessern. Wesentliches Merkmal eines Kolbenringes ist eine Teilungsfuge, die sich an einer Umfangsstelle quer durch den Ringkörper des Ringkolbens erstreckt, wodurch zwei Ringenden des Kolbenrings gebildet werden. Im Bereich der Teilungsfuge können die Ringenden mit verjüngten Stegen einander radial und/oder axial überlappen, was sich durch eine Z-förmig verlaufende Teilungsfuge bilden lässt. Im Bereich einer solchen axial oder radial und auch in der Umfangsrichtung verlaufenden Teilungsfuge sind die beiden Ringenden entsprechend der Überlappung radial oder axial aneinander abgestützt, wodurch nicht nur der Kolbenringsitz verbessert wird, sondern auch die Abdichtung, weil die Teilungsfuge aufgrund ihres Z-förmigen Verlaufs labyrinthförmig ausgebildet ist. Eine solche Ausbildung der Ringenden ist mit dem Begriff "Verschluss" bezeichnet worden, wodurch zum Ausdruck kommt, dass die Ringenden quer zur radialen und/oder axialen Überlappung aneinander gehalten sind. Ein weiterer Vorteil eines solchen Verschlusses mit einer Überlappung ist der, dass zwischen den Stirnflächen der Stege und den in Umfangsrichtung gegenüberliegenden Nutflächen der die Stege aufnehmenden Nuten ein Spaltabstand vorgesehen werden kann, der durch die Überlappung weitgehend geschlossen ist. Aufgrund dieses Spaltabstandes können sich die Ringenden in Umfangsrichtung an unterschiedliche Durchmesser der Kolbenringlagerung anpassen, wobei die Schließung des Spaltabstandes durch die Überlappung aufrechterhalten bleibt. Im Bereich dieses Spaltabstandes ergeben sich am seitlichen Auslauf der Teilungsfuge rechtwinklig zu den Seitenflächen angeordnete Spaltabstandsflächen.

In der US-A-1 350 849 ist ein Kolbenring für Verbrennungsmotoren beschrieben, dessen Kolbenringendabschnitte einander mit einem Überlappungsmittelsteg an dem einen Kolbenringendabschnitt und zwei den Überlappungsmittelsteg seitlich übergreifenden Überlappungsaußenstegen an dem anderen Kolbenringendabschnitt überlappen, wobei die Stege sich in jeweils gegenüberliegende Ausnehmungen erstrecken. Zwischen den Enden der Überlappungsaußenstege und den gegenüberliegenden Ausnehmungsflächen befinden sich Spaltabstände, in deren Bereich die Teilungsfuge seitlich austritt. Bei diesem vorbekannten Kolbenring handelt es sich um einen Kolbenring der im Oberbegriff des Anspruchs 1 angegebenen Art.

In US-A-1 343 828 zeigt einen Kolbenring für einen Benzinmotor, mit einander überlappenden Kolbenringendabschnitten, zwischen denen eine Teilungsfuge sich bezüglich den Seitenflächenebenen schräg und bezüglich dem zugehörigen Kolbenringendabschnitt konvergent erstreckt. Eine Außenumfangskante des Kolbenrings ist auf dem gesamten Umfang durch eine Fasenringfläche gebrochen.

Aus der FR-A-1 118 722 ist ein üblicher Kolbenring zu entnehmen, dessen Kolbenringenden einander mit Überlappungsstegen und diese aufnehmenden Ausnehmungen sowohl axial als auch radial überlappen, wobei die Ausnehmungen mit den Seitenflächen in den Seitenflächen liegende scharfe Kanten bilden.

Ein soweit beschriebener Kolbenring eignet sich für einen axial hin- und herbewegten Kolben, wie es bei einem Otto-Motor der Fall ist, für drehende Kolben, die z. B. bei einem Getriebe durch Wellen oder Hohlwellen gebildet sein können, und für stillstehende Kolben, die z. B. durch Achsen gebildet sein können. In allen vorgenannten Fällen kann der Kolbenring im Betrieb in Umfangsrichtung wandern. Bei einem drehenden Kolben kann ein solches Wandern in Umfangsrichtung auch durch die Kolbenreibung mit der Buchse hervorgerufen werden.

Ein vorliegender Kolbenring unterliegt nicht nur an seinem Umfang sondern auch an seinen Seitenflächen einem Verschleiß und zwar insbesondere im Bereich seiner Ringenden.

Der Erfindung liegt die Aufgabe zugrunde, einen Kolbenring gemäß der_im Oberbegriff des Anspruchs 1 angegebenen Art oder eine Drehdurchführung mit einem Kolbenring derart weiterzubilden, dass unter Vermeidung der genannten Nachteile die Verschleißanfälligkeit des Kolbens an wenigstens einer Seitenfläche vermindert und seine Lebensdauer vergrößert wird.

Diese Aufgabe wird durch die kennzeichnenden Merkmale des Anspruchs 1 in Verbindung mit seinen Oberbegriffsmerkmalen oder durch die Merkmale des Anspruchs 2 gelöst.

Die Unteransprüche bilden vorteilhafte Weiterbildungen der Erfindung.

Der Erfindung liegt zum einen die Erkenntnis zugrunde, dass der Verschleiß der Kolbenring-Seitenflächen insbesondere im Bereich der Ringenden durch eine verbesserte Schmierung vermindert werden kann. Zum anderen liegt der Erfindung die Erkenntnis zugrunde, dass die an der Teilungsfuge in die Seitenflächen auslaufenden Spaltabstandsflächen die Schmierung verschlechtern, weil sie mit ihren Seitenkanten insbesondere bei einer relativen Drehbewegung zwischen dem Kolben und dem Kolbenring einen Schmierfilm beeinträchtigen.

Sowohl bei dem Kolbenring nach Anspruch 1 als auch bei dem Kolbenring der Drehdurchführung nach Anspruch 2 ist auf einer oder auf beiden Seiten des Kolbenrings bei einem oder bei beiden Ringenden jeweils eine Schmiertasche mit einer vertieften Freifläche in der zugehörigen Seitenfläche vorgesehen, wobei die Freifläche in den zugehörigen Spaltabstand ausläuft. Durch die erfindungsgemäße Freifläche wird ein die Schmiertasche bildender Freiraum geschaffen, der die Aufnahme eines Schmiermittels, insbesondere eines Schmieröls, und somit die Schmierung verbessert. Dies führt zu einer Verringerung des Verschleißes an den Seitenflächen des Kolbenringes und zu einer langen Lebensdauer. Die Freifläche läuft am zugehörigen Ringende aus. Hierdurch wird eine zum Ringende hin offene Schmiertasche gebildet, in der sich das Schmiermittel gut sammeln und an die Seitenfläche des Kolbenrings auch gut abgegeben werden kann.

Die erfindungsgemäße Ausgestaltung führt nur bedingt zu einer Abdichtung des Kolben-Laufspaltes. Eine bestimmte Leckage ist erlaubt und zur Schmierung und Ölfilmbildung an der axialen Wirk- bzw. Gleitfläche des Kolbenringes erwünscht. Es lassen sich dadurch Druckverluste verhindern oder minimieren.
Die erfindungsgemäße Ausgestaltung eignet sich für Kolbenringe unterschiedlicher Kolben, z. B. auch für Zylinderkolben für Otto-Motoren.

Die erfindungsgemäße Ausgestaltung eignet sich besonders gut für einen Kolbenring, der auf einem Kolben montiert ist, der sich im Betrieb dreht. Hierbei kann es zu Verdrehungen des Kolbenrings bezüglich des Kolbens kommen, z. B. dann, wenn der Kolbenring aufgrund seiner Reibung mit der ihn umgebenden Buchse nicht oder weniger gedreht wird als der Kolben.

Insbesondere dann, wenn die Drehrichtung des Kolbens in die offene Schmiertasche hinein gerichtet ist, ergibt sich im Betrieb eine selbsttätige Füllung der Schmiertasche mit dem Schmiermittel, was wiederum zu einem Schmiermittelpolster führt, das die Schmierung verbessert.

Die Freifläche kann aber auch am Außenumfang des Kolbenrings auslaufen.

Wenn die Freifläche sich zum Ringende hin oder zum Außenumfang hin bezüglich der Ebene der Seitenfläche divergent erstreckt, ergibt sich eine keilförmige Schmiertaschenform, was sich ebenfalls günstig auf eine Schmiermittelzuführung zur Seitenfläche auswirkt.

Bei einem Kolbenring, dessen Ringenden sich mit verjüngten Stegen radial überlappen, erstrecken sich die Stege jeweils in einer Aufnahmenut des anderen Ringendes, wobei zwischen den freien Stirnflächen der Stege und den gegenüberliegenden Begrenzungsflächen der Nuten jeweils ein Spaltabstand vorhanden ist. Im Bereich dieser Spaltabstände lässt sich die Teilungsfuge durch einen Mittelsteg an einem der beiden Stege schließen, der in eine mittlere Aufnahmenut im anderen Steg einfasst. Bei einem solchen Verschluss des Kolbenrings können an ein und demselben Ringende zwei erfindungemäße Freiflächen im endseitigen Seitenflächenbereich in Umfangsrichtung versetzt angeordnet sein. Die eine Freifläche ist dabei im Endbereich des zugehörigen Stegs und die andere Freifläche bezüglich der Aufnahmenut ist in der Umfangsrichtung benachbart angeordnet.

Um den Kolbenring so auszugestalten, dass sein Einbau unabhängig davon ist, in welche Umfangsrichtung der Kolben dreht, ist es vorteilhaft, erfindungsgemäße Freiflächen in der Seitenfläche beider Ringenden vorzusehen.

Die Form der Divergenz der Freiflächen kann unterschiedlich sein. Es eignet sich z. B. eine spitzwinklige ebene Freifläche oder eine konvexe gerundete Freifläche. Es können auch an einem Kolbenring unterschiedlich geformte Freiflächen vorgesehen sein.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel. Es zeigt:
- Fig. 1: eine schematische perspektivische Darstellung eines durch eine Teilungsfuge geteilten Kolbenrings mit einem Verschluss für die Ringenden nach der Erfindung;
- Fig. 2: eine Draufsicht auf den Verschluss von Fig. 1 in vergrößerter Darstellung;
- Fig. 3: eine Seitenansicht des Verschlusses von Fig. 1;
- Fig. 4: eine Ansicht von innen des Verschlusses von Fig. 3 in abgewandelter Ausgestaltung;
- Fig. 5: eine Ansicht von innen des Verschlusses von Fig. 4 in weiter abgewandelter Ausgestaltung;
- Fig. 6: eine Seitenansicht eines abgewandelten Verschlusses nach der Erfindung;
- Fig. 7: eine Ansicht von innen des Verschlusses von Fig. 6;
- Fig. 8: einen Teilquerschnitt eines Kraftfahrzeuggetriebes mit mehreren erfindungsgemäßen Kolbenringen auf einem Kolben; und
- Fig. 9: einen Teilquerschnitt des Getriebes von Fig. 8 in abgewandelter Ausgestaltung.

Der in seiner Gesamtheit mit 10 bezeichnete Kolbenring besteht aus einem hohlzylindrischen Ringkörper 12 rechteckiger oder quadratischer Querschnittsform, der an einer Umfangsstelle durch eine Teilungsfuge 14 geteilt ist, die sich Z-förmig durch den Ringköper 12 erstreckt.

Aufgrund der Teilung ist der Ringköper 12 mit zwei Ringenden 12a, 12b versehen, die jeweils einen verjüngten Steg aufweisen, die einander überlappen und jeweils in eine neben dem gegenüberliegenden Steg angeordnete Aufnahmenut einfassen.

Wenn der Z-förmige Verlauf der Teilungsfuge 14 in axialer Ansicht sichtbar ist, befinden sich die einander überlappenden Stege radial nebeneinander. Wenn der Z-förmige Verlauf in radialer Ansicht sichtbar ist, befinden sich die einander überlappenden Stege axial nebeneinander.

Bei dem in den Zeichnungen dargestellten Ausführungsbeispiel weist der das Ringende 12a bildende Steg 16 eine T-förmige Querschnittsform auf mit einem Basissteg 16a, der sich z. B. radial innen befindet, und von dem ein Mittelsteg 16b z. B. radial nach außen absteht. Auf beiden Seiten des Mittelstegs 16b befinden sich Aufnahmenuten 16c, die sich parallel zur Ringform gekrümmt erstrecken. Diese sind seitlich außen und radial außen sowie am Ringende offen und werden radial innen durch die Außenflächen 16d des Basisstegs 16a und seitlich innen von den Seitenflächen 16e des Mittelstegs 16b begrenzt. Die am Ringende 12a offenen Aufnahmenuten 16c sind in der dem Ringende abgewandten Umfangsrichtung durch sich im wesentlichen radial erstreckende Begrenzungsflächen 16f begrenzt.

Der das Ringende 12b bildende und z. B. radial außen angeordnete Steg 18 ist durch zwei einen axialen Abstand a voneinander aufweisende Stege 18a gebildet, die sich entsprechend der Ringform gekrümmt in der jeweils zugehörigen Aufnahmenut 16c erstrecken.

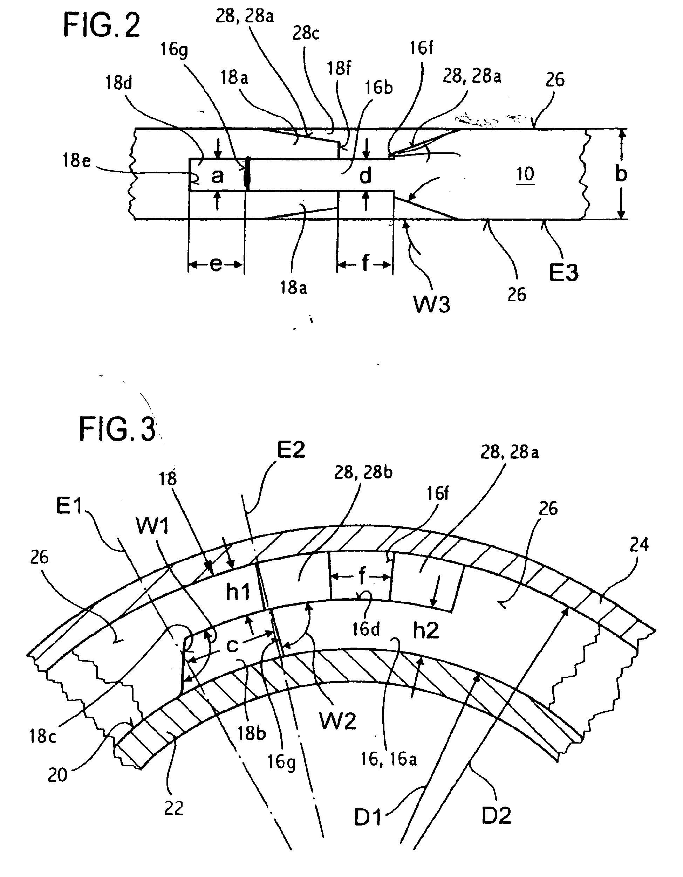

Radial innen von den Stegen 18a befindet sich eine sich über die gesamte Breite b des Kolbenrings 10 erstreckende Aufnahmenut 18b, in der sich der Basissteg 16a erstreckt. Eine die Aufnahmenut 18b in der Umfangrichtung begrenzende Begrenzungsfläche 18c kann sich in einer Axialebene E1 erstrecken oder mit den Stegen 18a einen stumpfen Winkel W1 bilden, wie es Fig. 3 zeigt. Die Stirnfläche 16g des Stegs 16a weist von der Begrenzungsfläche 18c einen sich in der Umfangsrichtung erstreckenden Abstand c auf. Die Stirnfläche 16g kann sich ebenfalls in einer Axialebene E2 erstrecken oder mit der Außenfläche 16d einen spitzen Winkel W2 einschließen.

Durch den Abstand a zwischen den Stegen 18a ist eine Aufnahmenut 18d gebildet, deren Breite mit Bewegungsspiel der Breite d des Mittelstegs 16b entspricht. Zwischen der die Aufnahmenut 18d in der Umfangsrichtung begrenzenden Begrenzungsfläche 18e und der Stirnfläche 16g des Mittelstegs 16b ist ein sich in die Umfangsrichtung erstreckender Spaltabstand e vorhanden. Ein dem Abstand e etwa entsprechender Spaltabstand f ist und zwischen den Stirnflächen 18f der Stege 18a und der in Umfangsrichtung gegenüberliegenden Begrenzungsfläche 16f vorhanden. Aufgrund der Abstände c, e und f kann der Kolbenring 10 sich im Rahmen seiner elastischen Biegsamkeit an geringfügig unterschiedliche Innendurchmesser D1 einer den Kolbenring 10 aufnehmenden Ringnut 20 in einem z. B. hülsenförmigen Kolben 22 und dem Innendurchmesser D2 einer Buchse 24 anpassen, in der der Kolben 22 unbeweglich oder längs hin und her beweglich oder drehbar gelagert ist, siehe Fig. 3.

Der Kolbenring 10 weist zwei den Kolbenring 10 begrenzende, über die Erstreckung in Umfangsrichtung im Wesentlichen parallel zueinander verlaufende Seitenflächen 26 auf.

In den Endbereichen eines Ringendes 12a, 12b oder beider Ringenden 12a, 12b ist in der jeweiligen Seitenfläche 26 des Kolbenrings 10 wenigstens eine vertiefte Freifläche 28 angeordnet, die am zugehörigen Ringende 12a, 12b ausläuft.

Bei den vorliegenden Ausführungsbeispielen mit einander radial überlappenden Stegen 16, 18 können Freiflächen 28a, 28b jeweils dem radialen Höhenbereich h1, h2 des zwischen den Ringenden 12a, 12b vorhandenen Spaltabstands c, f an diesen in der Umfangsrichtung angrenzend und in den Spaltabstand c, f auslaufend angeordnet sein. Die Freiflächen 28a, 28b sind dabei etwa um das Überlappungsmaß in Umfangsrichtung versetzt im Endbereich der Stege 16a, 18a und den gegenüberliegenden Enden der Aufnahmenuten 16c, 18b benachbart angeordnet sind.

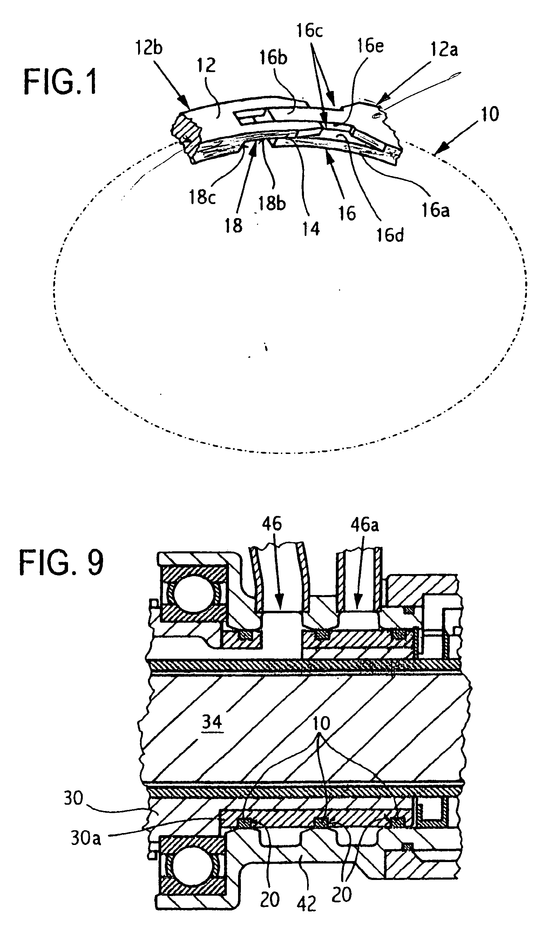

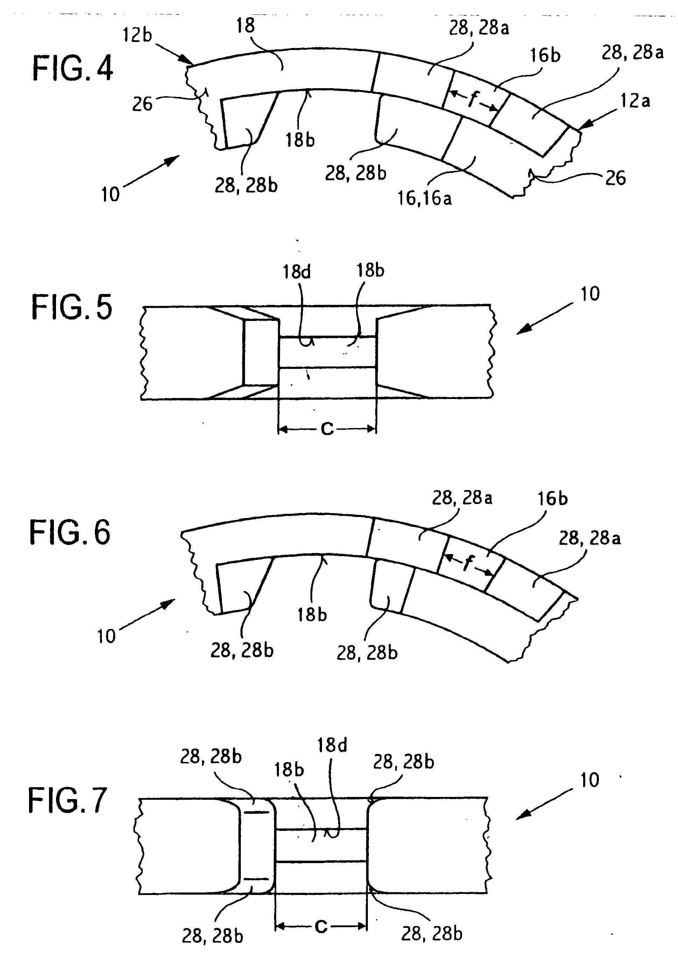

Beim Ausführungsbeispiel nach **Fig. 1** bis **3** sind nur in den an dem Spaltabstand f angrenzenden Endbereichen der Seitenflächen 26 Freiflächen 28a vorhanden. Beim Ausführungsbeispiel nach **Fig. 4** bis **7** sind auch in den an den Spaltabstand c angrenzenden Endbereichen der Seitenflächen 26 Freiflächen 28b vorgesehen.

Die jeweilige Freifläche 28 kann mit der Ebene E3 der Seitenfläche 26 entweder in der zum Spaltabstand c, f hin gerichteten Umfangsrichtungen (**Fig. 1** bis **3** und **Fig. 5** rechts) oder in der Radialrichtung (**Fig. 5** links) konvergent ausgebildet sein, z. B. mit der Seitenfläche 26 jeweils einen spitzen Winkel W3 einschließen.

Die Freiflächen 28a, 28b begrenzen im Einbauzustand nach **Fig. 3** jeweils einen Freiraum 28c, der zum zugehörigem Ringende 12a, 12b hin oder radial nach außen divergiert. Die radialen Höhen h1, h2 der Stege 16, 18 bzw. Aufnahmenuten 16c, 18b sind bei den Ausführungsbeispielen gleich groß.

Bei dem Ausführungsbeispiel nach den **Fig. 6** und **7** sind die Freiflächen 28b dem Spaltabstand c des radial inneren Stegs 16 zugeordnet. Diese Freiflächen 28 sind bezüglich ihrer Konvergenz konvex gerundet.

Im Rahmen der Erfindung können jeweils alle Freiflächen 28, 28a, 28b spitzwinklig oder gerundet ausgebildet sein.

Der Kolbenring 10 besteht aus bekanntem Material wie elastisch biegbarem Metall, z. B. Stahl.

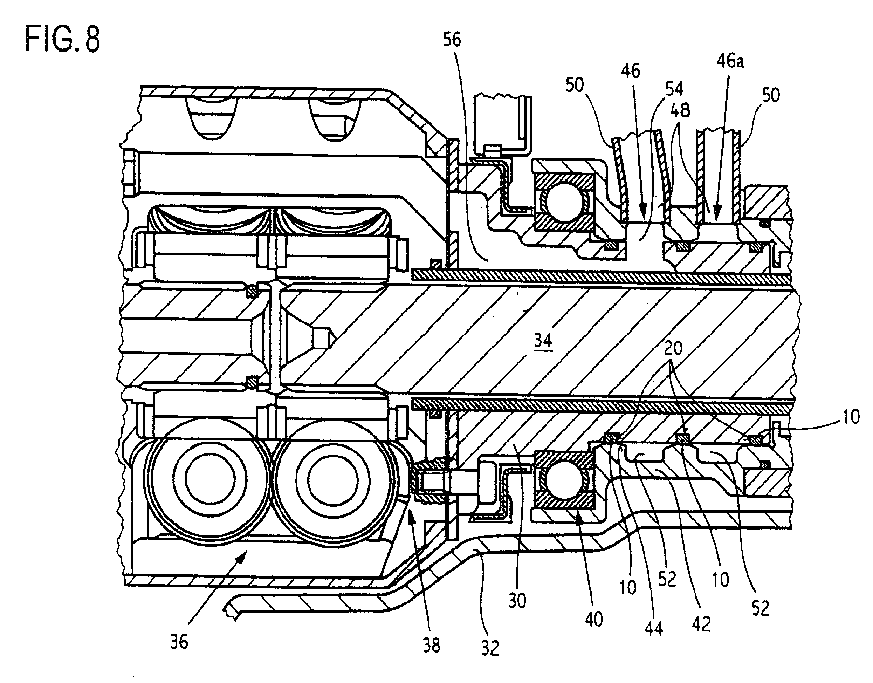

Beim Einbaubeispiel nach **Fig. 8** ist der wenigstens eine Kolbenring 10 auf einem Kolbenringträger 30 in Form einer hülsenförmigen Welle montiert, die in einem Getriebegehäuse 32 für ein Kraftfahrzeug drehbar gelagert ist und dabei eine Radantriebswelle 34 umgibt, die sich von einem Differentialgetriebe 36 zu einem nicht dargestellten Fahrzeugrad, insbesondere einem Vorderrad, erstreckt. Beim Ausführungsbeispiel ist das Differentialgetriebe 36 ein Torsendifferential, mit dessen drehbar gelagertem Basiskörper 38 der Kolbenringträger 30 drehfest verbunden, z. B. verschraubt, ist.

Der Kolbenringträger 30 ist durch ein oder mehrere Drehlager 40 und mit geringem Bewegungsspiel in einer nicht drehbar angeordneten Buchse 42 gelagert, und er bildet in der Buchse 42 eine axial wirksame Barriere im Ringspalt 44 zur Verhinderung oder Minimierung von Druckverlusten.

Beim Ausführungsbeispiel sind wenigstens zwei Kolbenringe 10 beiderseits einer radialen Dreheinführung 46 für ein hydraulisches Druckfluid angeordnet, mit einem radialen Durchgangskanal 48 in der Buchse 42, der außen mit einer Zuführungsleitung 50 verbunden ist. Der Durchgangskanal 48 mündet innen in eine Innenringnut 52 in der Buchse 42, in deren Bereich der Kolbenringträger 30 einen sich radial nach innen erstreckenden Kanal 54 aufweist. Von diesem Kanal 54 zweigt ein Weiterführungskanal 56 axial ab, der zu einem Verbraucher führt.

Beim Ausführungsbeispiel dient die Dreheinführung 46 dazu, das hydraulische Druckfluid zu einer nicht dargestellten Betätigungsvorrichtung für ein stufenlos verstellbares Getriebe zu führen.

Bei solchen Getrieben, bei denen ein zweites Druckfluid mit einem unterschiedlichen, z. B. höheren Arbeitsdruck benötigt wird, lässt sich dies durch eine zweite Dreheinführung 46a verwirklichen, die in einem axialen Abstand von der Dreheinführung 46 angeordnet ist und identisch oder prinzipiell gleich ausgebildet sein kann, wie die Dreheinführung 46 und die zugehörige Druckmittelzuführung, so dass diesbezüglich auf die vorhandenen Bezugszeichen verwiesen wird und eine erneute Beschreibung entfallen kann.

Das Einbaubeispiel nach **Fig. 9** unterscheidet sich von dem nach **Fig. 8** dadurch, dass die Kolbenringe 10 in Ringnuten 20 sitzen, die in einer Trägerhülse 30a angeordnet sind, die auf dem Kolbenringträger 30 sitzt und darauf gesichert ist. Der Kolbenringträger 30 kann für die Trägerhülse 30a eine passende Ringausnehmung aufweisen. Diese Ausgestaltung ist u. a. aus herstellungstechnischen Gründen vorteilhaft, weil die Ringnuten 20 an einem kleinen zusätzlichen Bauteil einfacher ausgebildet werden können, als am größeren Kolbenringträger 30.

Bei den vorbeschriebenen Einbaubeispielen, bei denen der oder die Kolbenringe 10 axial mit einem Fluiddruck beaufschlagt werden, eignet sich die erfindungsgemäße Ausgestaltung der Kolbenringe 10 besonders gut. Hierbei ist zu berücksichtigen, dass der wenigstens eine Kolbenring 10 durch den Fluiddruck axial beaufschlagt wird und deshalb auf der der Druckbeaufschlagung abgewandten Seite eine beträchtliche Verschleißbeanspruchung zwischen dem Kolbenring 10 und der ihn stützenden Seitenwand der Ringnut 20 stattfindet. In diesem Falle reicht es für eine Verminderung der Verschleißanfälligkeit des Kolbenrings 10 aus, diesen auf der der Druckbeaufschlagung abgewandten Seite erfindungsgemäß auszubilden. Um jedoch den Kolbenring 10 auch in diesen Fällen so auszubilden, dass er unabhängig von seinem Einbau ist, ist es vorteilhaft, den Kolbenring 10 an seinen beiden Seitenflächen 26 erfindungsgemäß auszubilden.

Bei allen vorbeschriebenen Ausführungs- und Einbaubeispielen führt die erfindungsgemäße Ausgestaltung zu einer Verbesserung der Ölfilmbildung, und zwar sowohl an der oder den betreffenden Seitenflächen des Kolbenrings 10 als auch an dessen Umfangsfläche. Letzteres ist darauf zurückzuführen, dass die erfindungsgemäßen Schmiertaschen auch am Außenumfang des Kolbenrings 10 auslaufen und offen sind, so dass das Schmiermittel auch am Außenumfang die Schmierung verbessern kann.

### BEZUGSZEICHENLISTE

- 10: Kolbenring
- 12: Ringkörper
- 12a: Ringende
- 12b: Ringende
- 14: Teilungsfuge
- 16: Steg
- 16a: Basissteg
- 16b: Mittelsteg
- 16c: Aufnahmenut
- 16d: Außenfläche
- 16e: Seitenfläche
- 16f: Begrenzungsfläche
- 16g: Stirnfläche
- 18: Steg
- 18a: Steg
- 18b: Aufnahmenut
- 18c: Begrenzungsfläche
- 18d: Aufnahmenut
- 20: Ringnut
- 22: Kolben
- 24: Buchse
- 26: Seitenfläche
- 28: Freifläche
- 28a: Freifläche
- 28b: Freifläche
- 28c: Freiraum
- 30: Kolbenringträger
- 30a: Trägerhülse
- 32: Getriebegehäuse
- 34: Radantriebswelle
- 36: Differentialgetriebe
- 38: Basiskörper
- 40: Drehlager
- 42: Buchse
- 44: Ringspalt
- 46: Dreheinführung
- 46a: Dreheinführung
- 48: Durchgangskanal
- 50: Zuführungsleitungen
- 52: Innenringnut
- 54: Kanal
- 56: Weiterführungskanal

- a: axialer Abstand
- b: Breite
- c: Spaltabstand
- d: Breite
- e: Abstand
- f: Abstand
- h1: Höhenbereich
- h2: Höhenbereich

- D1: Innendurchmesser
- D2: Innendurchmesser
- E1: Axialebene
- E2: Axialebene
- E3: Ebene der Seitenfläche
- W1: Winkel
- W2: Winkel
- W3: Winkel
- W4: Winkel

## Patentansprüche

1. Kolbenring (10) mit zwei den Kolbenring (10) seitlich begrenzenden, über die Umfangserstreckung im Wesentlichen parallel zueinander verlaufenden Seitenflächen (26) mit zwei Ringenden (12a, 12b) und mit einer die zwei Ringenden (12a, 12b) bildenden Teilungsfuge (14), die durch verjüngte und sich überlappende Stege (16a, 18a) im Bereich der Ringenden (12a, 12b) überlappt ist und eine axial wirksame Barriere im Ringspalt (44) zwischen der Buchse (42) und dem Kolbenringträger (30) bildet, **dadurch gekennzeichnet, dass** auf einer oder auf beiden Seiten des Kolbenrings (10) bei einem Ringende (12a, 12b) oder bei beiden Ringenden (12a, 12b) jeweils eine Schmiertasche mit einer vertieften Freifläche (28) in der zugehörigen Seitenfläche (26) angeordnet ist, wobei die vertiefte Freifläche (28) sich in Richtung auf das zugehörigen Ringende (12a, 12b) keilförmig erstreckt und in den Ringspalt (f) am Ringende (12a, 12b) ausläuft.

2. Kolbenring nach Anspruch 1, **dadurch gekennzeichnet, dass** die Freifläche (28) auch zu dem Außenumfang des Kolbenrings (10) ausläuft.

3. Kolbenring nach einem der vorhergehenden Ansprüche, **dadurch gekennzeichnet, dass** die Freifläche (28) sich bezüglich der Ebene der Seitenfläche (26) divergent zum Ringende (12a, 12b) und/oder zum Außenumfang des Kolbenrings (10) erstreckt.

4. Kolbenring nach Anspruch 3, **dadurch gekennzeichnet, dass** die Freifläche (28) mit der Ebene (E3) der Seitenfläche (26) einen spitzen Winkel (W3, W4) einschließt, der vorzugsweise etwa 5° bis 30° beträgt.

5. Kolbenring nach Anspruch 3, **dadurch gekennzeichnet, dass** die Freifläche (28) sich zum zugehörigen Ringende (12a, 12b) hin konvex gerundet erstreckt.

6. Kolbenring nach einem der vorherigen Ansprüche, **dadurch gekennzeichnet, dass** die Stege (16, 18) einander in radialer Richtung und/oder axialer Richtung überlappen.

7. Kolbenring nach Anspruch 6, **dadurch gekennzeichnet, dass** die Stege (16, 18) einander in radialer Richtung überlappen und einer der beiden Stege (16, 18) einen Mittelsteg (16b) aufweist, der in eine Aufnahmenut (18d) im anderen Steg (18) einfasst.

8. Kolbenring nach einem der vorherigen Ansprüche, **dadurch gekennzeichnet, dass** der Kolbenring (10) bezüglich einer radialen Mittelebene spiegelsymmetrisch ausgebildet ist.

9. Drehdurchführung mit einer Buchse (42) und einer in der Buchse (42) angeordneten Welle, die zueinander drehbar gelagert sind und mit einem zwischen der Welle und der Buchse (42) angeordneten ringförmigen Kanal (54), wobei zur Abdichtung des Kanals (54) zwischen der Buchse (42) und der Welle ein Kolbenring (10) nach einem der Ansprüche 1 bis 8 angeordnet ist.

10. Drehdurchführung nach Anspruch 9, **dadurch gekennzeichnet, dass** auf beiden Seiten des radialen Kanals (54) ein Kolbenring (10) angeordnet ist.

11. Drehdurchführung (46) nach Anspruch 9 oder 10 für ein hydraulisches Druckfluid, mit einem Kolbenringträger (30) in Form einer hülsenförmigen Welle, die in einem Getriebegehäuse (32) eines Kraftfahrzeugs drehbar gelagert ist und eine Radantriebswelle (34) umgibt, wobei der Kolbenringträger (30) durch ein oder mehrere Drehlager (40) und mit geringem Bewegungsspiel in einer nicht drehbar angeordneten Buchse (42) gelagert ist, wobei wenigstens ein Kolbenring (10) einerseits eines radialen Durchgangskanals (48) in der Buchse (42) angeordnet ist, wobei der Durchgangskanal (48) innen in eine Innenringnut (52) in der Buchse (42) mündet, in deren Bereich der Kolbenringträger (30) einen sich radial nach innen erstreckenden Kanal (54) aufweist, von dem ein Weiterführungskanal (56) axial abzweigt, der zu einem Verbraucher führt, wobei der Kolbenring (10) seitlich jeweils mit einem Spaltabstand (f) an der Seitenfläche (26) austritt, wobei wenigstens auf der dem radialen Kanal (54) abgewandten Seite oder auf beiden Seiten des Kolbenrings (10) bei einem Ringende (12a, 12b) oder bei beiden Ringenden (12a, 12b) jeweils eine Schmiertasche in der zugehörigen Seitenfläche (26) angeordnet ist, deren vertiefte Freifläche (28) sich in Richtung auf das zugehörige Ringende (12a, 12b) keilförmig erstreckt und in den Ringspalt (f) am Ringende (12a, 12b) ausläuft.

## Claims

1. A piston ring (10) having two lateral surfaces (26) forming the lateral boundary of said piston ring (10) and extending so as to lie substantially parallel to one another over its circumference, with two ring ends (12a, 12b) and with a separation joint (14), forming the two ring ends (12a, 12b), which is overlapped in the region of the ring ends (12a, 12b) by narrowed and overlapping projections (16a, 18a) and forms an axially effective barrier in the annular gap (44) between the bush (42) and the piston ring carrier (30), **characterized in that** on one or both sides of the piston ring (10), in the case of one ring end (12a, 12b) or both ring ends (12a, 12b), a lubrication recess with a recessed free surface (28) is provided in the associated lateral surface (26), the recessed free surface (28) extending towards the associated ring end (12a, 12b) in the form of a wedge and terminating in the annular gap (f) at the ring end (12a, 12b).

2. A piston ring according to Claim 1, **characterized in that** the free surface (28) also terminates at the outer circumference of the piston ring (10).

3. A piston ring according to one of the preceding claims, **characterized in that** the free surface (28) extends, in such a way as to diverge relative to the plane of the lateral surface (26), towards the ring end (12a, 12b) and/or towards the outer circumference of the piston ring (10).

4. A piston ring according to Claim 3, **characterized in that** the free surface (28) forms an acute angle (W3, W4) with the plane (E3) of the lateral surface (26), said angle preferably being approximately 5° to 30°.

5. A piston ring according to Claim 3, **characterized in that** the free surface (28) extends towards the associated ring end (12a, 12b) so as to be convexly rounded in shape.

6. A piston ring according to one of the preceding claims, **characterized in that** the projections (16, 18) overlap one another in radial direction and/or in axial direction.

7. A piston ring according to Claim 6, **characterized in that** the projections (16, 18) overlap one another in radial direction and one of the two projections (16, 18) includes a central projection (16b) which is inserted in a receiving slot (18d) in the other projection (18).

8. A piston ring according to one of the preceding claims, **characterized in that** the piston ring (10) is formed so as to be mirror-symmetrical relative to a radial median plane.

9. A rotary transmission leadthrough with a bush (42) and a shaft disposed in the bush (42), which are mounted so as to be rotatable relative to one another, and with an annular channel (54) provided between the shaft and the bush (42), a piston ring (10) according to one of Claims 1 to 8 being disposed between the bush (42) and the shaft for the purpose of sealing said channel (54).

10. A rotary transmission leadthrough according to Claim 9, **characterized in that** a piston ring (10) is disposed on both sides of the radial channel (54).

11. A rotary transmission leadthrough (46) according to Claim 9 or 10 for a hydraulic pressure fluid, with a piston ring carrier (30) in the form of a sleeve-like shaft which is rotatably mounted in a gearbox (32) of a motor vehicle and surrounds a wheel drive shaft (34), in which case the piston ring carrier (30) is carried with negligible play by one or more pivot bearings (40) in a non-rotatable bush (42), at least one piston ring (10) being disposed on one side of a radial through channel (48) in the bush (42) and the through channel (48) opening on the inside into an inner annular slot (52) in the bush (42), in the region of which the piston ring carrier (30) has a channel (54) extending radially inwards and a continuation channel (56) branching off in axial direction from said channel (54) and leading to a consumer, the piston ring (10) emerging at the side at the lateral surface (26) in each case with a clearance (f), in which case at least on the side away from the radial channel (54) or on both sides of the piston ring (10), at one ring end (12a, 12b) or at both ring ends (12a, 12b), a lubrication recess is provided in the associated lateral surface (26), its recessed free surface (28) extending towards the associated ring end (12a, 12b) in the form of a wedge and terminating in the annular gap (f) at the ring end (12a, 12b).

## Revendications

1. Segment de piston (10) avec deux surfaces latérales (26) délimitant latéralement le segment de piston (10), s'étendant sur la projection périphérique principalement parallèlement l'une par rapport à l'autre, avec deux extrémités de segment (12a, 12b) et avec une fente de séparation (14) formant les deux extrémités de segment (12a, 12b) et qui est recouverte par des cloisons (16a, 18a) se réduisant et se chevauchant dans le secteur des extrémités de segment (12a, 12b) et forme une barrière active axialement dans la fente de segment (44) entre la douille (42) et le porte-segment de piston (30), **caractérisé en ce que**, sur un ou sur les deux côtés du segment de piston (10), pour une extrémité de segment (12a, 12b) ou pour les deux extrémités de segment (12a, 12b), respectivement un creux de graissage avec une surface libre creusée (28) est disposé dans la surface latérale correspondante (28), à l'occasion de quoi la surface libre creusée (28) s'étend de manière cunéiforme dans la direction de l'extrémité de segment correspondante (12a, 12b) et se répand dans la fente de segment (f) sur l'extrémité de segment (12a, 12b).

2. Segment de piston conformément à la revendication 1, **caractérisé en ce que** la surface libre (28) aboutit également vers la périphérie extérieure du segment de piston (10).

3. Segment de piston conformément à l'une des revendications précédentes, **caractérisé en ce que** la surface libre (28) par rapport au plan de la surface latérale (26) s'étend divergente par rapport à l'extrémité de segment (12a, 12b) et / ou par rapport à la périphérie extérieure du segment de piston (10).

4. Segment de piston conformément à la revendication 3, **caractérisé en ce que** la surface libre (28) inclut avec le plan (E3) de la surface latérale (26) un angle aigu (W3, W4), qui s'élève de préférence approximativement de 5° à 30°.

5. Segment de piston conformément à la revendication 3, **caractérisé en ce que** la surface libre (28) s'étend arrondie convexe vers l'extrémité de segment correspondante (12a, 12b).

6. Segment de piston conformément à l'une des revendications précédentes, **caractérisé en ce que** les cloisons (16, 18) se chevauchent l'une l'autre dans le sens radial et / ou axial.

7. Segment de piston conformément à la revendication 6, **caractérisé en ce que** les cloisons (16, 18) se chevauchent mutuellement dans le sens radial et **en ce que** l'une des deux cloisons (16, 18) présente une cloison centrale (16b), qui s'insère dans une rainure de réception (18d) dans l'autre cloison (18).

8. Segment de piston conformément à l'une des revendications précédentes, **caractérisé en ce que** le segment de piston (10) est réalisé en symétrie miroir par rapport à un plan central radial.

9. Passage tournant avec une douille (42) et un arbre disposé dans la douille (42) qui sont montés rotatifs l'un par rapport à l'autre et avec un canal annulaire (54) disposé entre l'arbre et la douille (42), à l'occasion de quoi, pour l'étanchéification du canal (54) entre la douille (42) et l'arbre, est disposé un segment de piston (10) conformément à l'une des revendications 1 à 8.

10. Passage tournant conformément à la revendication 9, **caractérisé en ce qu'**un segment de piston (10) est disposé sur les deux côtés du canal radial (54).

11. Passage tournant (46) conformément à la revendication 9 ou 10 pour un fluide de pression hydraulique, avec un porte-segment de piston (30) sous forme d'un arbre en forme de douille, qui est monté rotatif dans un carter de transmission (32) d'un véhicule automobile et entoure un arbre de transmission de roue (34), à l'occasion de quoi le porte-segment de piston (30) est monté par un ou plusieurs paliers de pivot (40) et avec un faible jeu de mouvement dans une douille (42) disposée non rotative, à l'occasion de quoi d'une part au moins un segment de piston (10) d'un canal de passage radial (48) est disposé dans la douille (42), à l'occasion de quoi le canal de passage (48) débouche à l'intérieur d'une rainure de segment interne (52) dans la douille (42), dans le secteur de laquelle le porte-segment de piston (30) présente un canal (54) s'étendant radialement vers l'intérieur, à partir duquel un canal d'alimentation ultérieure (56) est dérivé axialement, qui mène à un récepteur, à l'occasion de quoi le segment de piston (10) sort latéralement à la surface latérale (26) avec respectivement un écart de fente (f), à l'occasion de quoi un creux de graissage est disposé respectivement dans la surface latérale correspondante (26) au moins sur le côté opposé au canal radial (54) ou sur les deux côtés du segment de piston (10) pour une extrémité de segment (12a, 12b) ou pour les deux extrémités de segment (12a, 12b), creux dont la surface libre creusée (28) s'étend de manière cunéiforme dans le sens de l'extrémité de segment correspondante (12a, 12b) et aboutit dans la fente annulaire (f) sur l'extrémité de segment (12a, 12b).
